(19) **Europäisches Patentamt**

**European Patent Office**

**Office européen des brevets**

(11) **EP 0 666 441 B1**

(12) **EUROPEAN PATENT SPECIFICATION**

(45) Date of publication and mention
of the grant of the patent:
**23.12.1998 Bulletin 1998/52**

(51) Int Cl.$^6$: **F16K 17/04**

(21) Application number: **95101133.7**

(22) Date of filing: **27.01.1995**

(54) **Device with limit shutter for oleodynamic valves**

Vorrichtung mit Druckentlastungsventil für hydraulische Ventile

Dispositif avec clapet limiteur de pression pour vannes hydrauliques

(84) Designated Contracting States:
**AT BE CH DE DK ES FR GB GR LI NL PT SE**

(30) Priority: **01.02.1994 IT MI940178**

(43) Date of publication of application:
**09.08.1995 Bulletin 1995/32**

(73) Proprietor: **GMV MARTINI S.p.A.**
**I-20016 Pero (Milano) (IT)**

(72) Inventor: **Martini, Angelo**
**I-20016 Pero, Milan (IT)**

(74) Representative: **Lecce, Giovanni**
**UFFICIO BREVETTI CALCIATI S.r.l.**
**via G. Negri,10**
**20123 Milano (IT)**

(56) References cited:
**DE-A- 2 202 695**          **US-A- 4 616 672**

## Description

This invention relates to a device with a limit flow shutter for oleodynamic valves.

More particularly, this invention relates to a device with a limit shutter for oleodynamic valves, especially suitable for the actuation of controls in hydraulic operation systems for lifts and the like. The shutter, which protrudes from a seal chamber containing pressurized fluid, normally engages in a corresponding port obtained on the feeding line of one of said valves. The shutter is provided with an inner space wherein a piston equipped with a return spring can fluctuate.

At the beginning of each operating step, the pressurized fluid controlling the oleodynanic valves develops its pressure on the shutter, obliging it to a backwards movement which causes a progressive opening of the corresponding port and a balance of the pressures upstream and downstream of the shutter.

However, the above backwards movement is calibrated and regulated through the contrast exerted by the uncompressible fluid which is contained in the chamber from which said shutter protrudes. Said contrast is obtained by means of the sliding of the inner piston of the shutter which shifts of a quantity corresponding to the volume of fluid which said shutter shifts during the backwards movement in said chamber. Once the pressure compensation has been reached, the shutter returns to the closing position on its port by means of a return spring and the pressurized fluid introduced in said chamber and preferably coming from the feeding line of the oleodynamic valve. The operating steps described take place at each opening and closing control operation performed by the oleodynamic valve with the flow of the actuating fluid, so that they take place progressively and gradually, without bobbings.

It is known that in many applications, and in particular in the realization of hydraulic operating systems for lifts, materials lifts and the like, the oleodynamic valves utilized for the actuation of the controls are provided with so-called antibobbing devices.

Such devices are usually constituted by shutters which, lacking electric and/or hydraulic signals, remain closed through the action of a pressure spring. When the fluid circulation pump is actuated, the antibobbing system of the lifts is obliged to move backwards, and this happens through the opening, by means of electric or hydraulic or mixed systems, of a drainage passage. As the actuation of the pump and therefore of the corresponding oleodynamic valve is markedly rapid, in order to reduce as much as possible the ensuing bobbing effect, rather complicated systems have been realized.

Said systems include oleodynamic valves, corresponding pilotage elements, drainage passages rather complex, bulky, difficult to arrange and regulate and very expensive. As the delivery of the installed fluid pumps increases, the aforementioned problems become more severe and significant.

Another drawback shown by the present systems lies in the fact that the stop position of said shutters is fixed; as a consequence, when applied on different valves, the shutter stops in different points. The starting delay, or better the progressive start of lifts is not constant. Such delays involve useless energy wastes.

Further drawbacks arise from the fact that the traditional oleodynamic systems provide, for the starting acceleration shutter, a service and pilotage valve of the hydraulic or electric type or of a mixed type, for the pressurization of the installation; if the control of the above shutter should be out of order, the take-off, because of the lack of a backwards movement, would be violent and in the worst cases the motor would not start.

Object of this invention is to remove the above drawbacks.

A device suitable for the actuation of controls in hydraulic operation systems for reducing the ensuing bobbing effects is known from US-A-4,616,672.

The device disclosed in this document has the features defined in the preamble of claim 1.

The device suitable for the actuation of controls in hydraulic operation systems for reducing the ensuing bobbing effects of the present invention is characterized in that it further comprises a seal chamber containing pressurized fluid and connected to the feeding line through a line provided with an acceleration regulator, the hollow shutter extending in said seal chamber and the inner space thereof communicating with said seal chamber, and in that a sliding piston with an antagonist elastic system and with a front stop is located within the inner space of said hollow shutter.

The device of this invention, to be utilized in particular for controls of lifts materials lifts and the like, allows to achieve the following results: the damping action of the starting take-off depends on the pressure differences on the shutter and the contrasting effect of the movement caused by the shifting of volumes, compensated within the frame of constant fluid volumes; the damping action takes place in a progressive manner at each control, reaching the operating conditions without bobbings; the sequential closing takes place through a mechanical return reaction and through the action of the pressurized fluid let in the seal chamber; the shutter is applicable to any type of oleodynamic valve for the aforementioned systems, and its mechanical and geometric configuration is of simple and proportional realization.

The advantages reached through the utilization of the shutter subject matter of this invention lie essentially in that the shutter is of the variable volume type and consequently the regulation of the flow of the control operating fluid can be changed, with the ensuing result of a progressive start manoeuvre, with damping of the take-off effect and gradual and progressive movement.

Further advantages ensue from the fact that the mechanical configuration of the device is constituted by few elements, easily realizable and assembleable, which can be calibrated easily and which are not expensive.

The structural and functional characteristics of the device of this invention will be better understood from the following description wherein reference is made to the enclosed drawings which show a preferred embodiment proposed by non limitative way of example, wherein:

Fig. 1 is a schematic view of a section of the shutter subject matter of this invention in its operating closing position;

Fig. 2 is the same view of the same shutter of Fig. 1 in opening operating position.

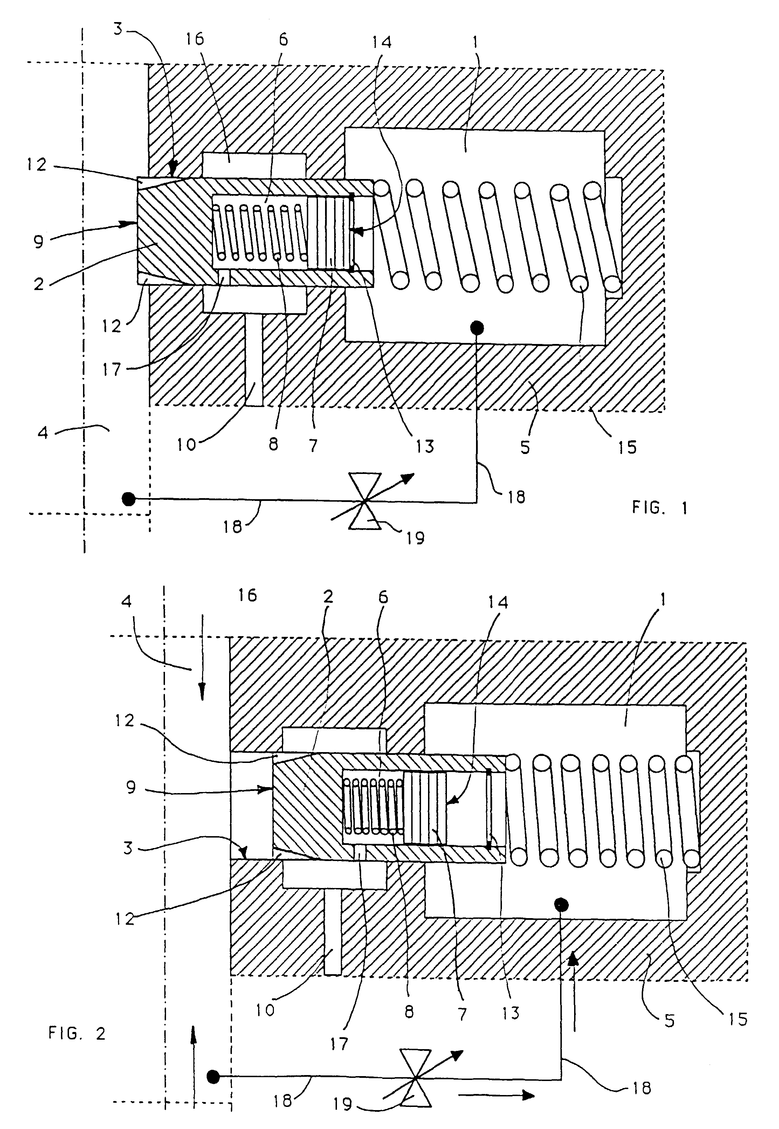

With special reference to the drawings, the limit shutter (2) for oleodynamic valves (5) subject matter of this invention protrudes from a seal chamber (1) containing pressurized fluid towards the outside to engage in a port (3) obtained in the feeding line (4) of said valve.

Shutter (2) is hollow in correspondence of the side looking towards chamber (1) and a piston (7) slides in its inner space, which counters an antagonist back spring (8) located between said piston (7) and the inner surface of space (6).

A front stop device (13), located in said space (6) near its open side limits the travel of piston (7).

Space (6) is open on the back side and in communication with the seal chamber (1), so that the fluid contained in said chamber (1) gets in touch also with surface (14) of piston (7).

The shutter (2) comprises some front grooves (12) having a profile which decreases progressively in the direction of line (4) towards port (3).

A return spring (15), located in chamber (1) acts on shutter (2), keeping it in operating closing position.

Between chamber (1) and line (4) a seat (16) is obtained provided with drainage exhaust (10) and crossed by shutter (2).

The feeding line (4) and the seal chamber (1) communicate with one another through a line (18) provided with an acceleration regulator (19), normally closed during the starting steps of each start.

In the operating stage, or at each start of the pump for the control of the operating fluid which is caused to run in line (4), in either direction, the pressure of said fluid acts on the front part (9) of shutter (2), pushing it towards the inside of said chamber (1).

The movement of shutter (2) is however countered by the fluid contained in chamber (1). The reduction in volume of chamber (1) due to the occupation of same by the volume of the backwards moving shutter, is set off by transmitting said variation within space (6) of shutter (2). This involves a corresponding backwards movement of piston (7) and a compression of the antagonistic spring (8).

So, the backwards movement of shutter (2) takes place in a regulated manner, with a progressive opening of the port and fluid drainage through grooves (12).

The drained fluid is exhausted through seat (16) and line (10).

The regulator (19) remains closed and the fluid does not run in line (18) for the whole duration of the backwards travel of shutter (2) towards the inside of chamber (1).

Shutter (2) may be provided with at least a hole (17) for the connection and pressure compensation and/or exhaust of possible leaks. Said hole (17) allows the back part of the inner space (6) containing the antagonistic spring (8) to communicate with the drainage seat (16).

The partial and progressive drainage of the actuating fluid allows a starting moderation of the action of same on the control members. The progressive equalization of the pressure upstream and downstream of shutter (2) allows, as a consequence, to reach the balance of the system and to cause the closing of the shutter, always in progression, thanks to the action of its back spring (15) and to the action of the pressurized fluid coming from the feeding line (4) through the opening of the acceleration regulator (19).

In substance, the system is made hydraulically elastic by the starting backwards movement of the shutter and the progressive return of same to the closing position, absorbing the starting excess pressure load on taking-off, eliminating bobbings and regulating progressively the movement speed, until the operating speed is reached. Such action operates both in the starting and in the stop stages, through the reversal of the flow of the control fluid.

All what is described above is reached by a system having a simple geometric configuration, easily realizable and proportionable with mathematic exactness, with no need for fluid exhaust or with only minor exhausts substantially due to the drainage of the parts. Shutter (2) can move backwards with a constant travel for each operation, established exactly by the ratio between the volume (V1) corresponding to the backwards movement of said shutter and the volume of fluid compensation (V2) relating to the shifting of the internal piston (7).

By way of example, from the constant ratio V1/V2 = 1, or from the relation V1 - V2 = V const., one determines the exact proportions of the shutter, taking into account the relations:

$$V1 = (De2 - Di2) \times S1 \times 3.14/4 \qquad (A)$$

and

$$V2 = Di2 \times S2 \times 3.14/4 \qquad (B)$$

where

De =  external diameter of shutter (2)
Di =  diameter of the inner space (6)
S1 =  travel required by shutter (2) in the acceleration stage, through chamber (1)

S2 = relative shifting of piston (7) in space (6).

From the mathematic development of the relations (A) and (B) one deduces:

$$(De2 - Di2) \times S1 \times 3.14/4 = Di2 \times S2 \times 3.14/4$$

$$(De2 - Di2) \, S1 = Di2 \times S2$$

$$De2 \times S1 = Di2 \times S2 + Di2 \times S1$$

$$De2 \times S1 = Di2 \, (S2 + S1)$$

from which:

$$Di2 = De2 \times S1 \, / \, (S2 + S1)$$

and

$$S2 = S1 \, (De2 - Di2)/Di2$$

While this invention has been described and illustrated according to a given embodiment and only by way of non limitative example, it is obvious that various changes can be made in the components, the structure, the composition, the positioning, the orientation of the various members, without exceeding the protection scope of this invention as defined in the appended claims.

**Claims**

1. A device suitable for the actuation of controls in hydraulic operation systems for reducing the ensuing bobbing effects, comprising:

   - a valve body (5) connected to a feeding line (4) of a fluid circuit and provided with a seat (16), having a drainage exhaust (10), and with a port (3) connecting said feeding line (4) to the seat (16);
   - a sliding hollow shutter (2), having an inner space (6), protruding from the seat (16) and engaging, in the closed position, in the port (3), and
   - a return spring (15) acting on said shutter (2) to maintain it in closing operating position;

   characterized in that said device further comprises a seal chamber (1) containing pressurized fluid and connected to the feeding line (4) through a line (18) provided with an acceleration regulator (19) the hollows shutter (2) extending in said seal chamber (1) and the inner space (6) thereof communicating with said seal chamber (1), and in that a sliding piston (7) with an antagonist elastic system (8) and with a front stop (13) is located within the inner space (6) of said hollow shutter (2).

2. The device according to claim 1, wherein the return spring (15) is located in the seal chamber (1) and acts on one end of the shutter (2).

3. The device according to claim 1 or 2, wherein the antagonist elastic means (8) is located between the piston (7) and the inner surface of the space (6).

4. The device according to anyone of the preceding claims, wherein the acceleration regulator (19) is closed during the movement of the shutter (2) towards the seal chamber (1).

5. The device according to anyone of the preceding claims, wherein the shutter (2) comprises front grooves (12) whose profile decreases progressively from the feeding line (4) to the port (3); said front grooves (12) progressively opening with the backwards movement of the shutter (2) under the action of the pressure of the fluid flowing in the feeding line (4).

6. The device according to anyone of the preceding claims, wherein the configuration is such that the backwards movement of the shutter (2) is a consequence of the compensation of the fluid of the sealing chamber (1) shifted into space (6), with the shifting of the sliding piston (7) and compression of the antagonist back spring (8).

7. The device according to claim 6, wherein the configuration is such that the backwards movement of the shutter (2) is proportional to and function of the relation $V1/V2 = 1$, wherein V1 is the volume corresponding to the backwards movement of the shutter (2) and V2 is the volume of the fluid compensation relating to the shifting of the sliding piston (7).

8. The device according to anyone of the preceding claims, wherein the configuration is such that the shifting S2 of the sliding piston (7) in the inner space (6) is directly proportional to the product of the travel S1 of the shutter (2) with the difference between the squared of the external diameter of the shutter (2) and the squared of the diameter of the inner space (6), and inversely proportional to the squared of the diameter of the inner space (6).

9. The device according to anyone of the preceding claims, wherein the shutter (2) is provided with at least one hole (17) communicating the inner space (6) with the seat (16).

10. The use of the device according to anyone of the preceding claims in any type of oleodynamic valves utilized for the actuation of controls in hydraulic operations of lifts, elevators, goods lifts and the like.

## Patentansprüche

1. Vorrichtung, die sich zum Betätigen von Steuerungen in hydraulischen Betriebssystemen zur Verringerung der resultierenden Fluktuationseffekte eignet, die umfaßt:

   - einen Ventilkörper (5), der mit einer Speiseleitung (4) eines Fluidkreises verbunden und mit einem Sitz (16) mit einem Ablaufauslaß (10) und einem Anschluß (3) versehen ist, der die Speiseleitung (4) mit dem Sitz (16) verbindet;

   - einen gleitenden hohlen Verschluß (2) mit einem Innenraum (6), der von dem Sitz (16) vorsteht und in der geschlossenen Position in den Anschluß (3) eingreift, und

   - eine Rückstellfeder (15), die auf den Verschluß (2) wirkt und ihn in geschlossener Position hält;

   **dadurch gekennzeichnet,** daß die Vorrichtung des weiteren eine Dichtungskammer (1) umfaßt, die unter Druck stehendes Fluid enthält und mit der Speiseleitung (4) über eine Leitung (18) verbunden ist, die mit einem Beschleunigungsregler (19) versehen ist, wobei der hohle Verschluß (2) sich in der Dichtungskammer (1) erstreckt, und der Innenraum (6) desselben mit der Dichtungskammer (1) in Verbindung steht, und dadurch, daß ein gleitender Kolben (7) mit einem gegenwirkenden elastischen System (8) und einem vorderen Anschlag (13) in dem Innenraum (6) des hohlen Verschlusses angeordnet ist.

2. Vorrichtung nach Anspruch 1, wobei die Rückstellfeder (15) in der Dichtungskammer (1) angeordnet ist und auf ein Ende des Verschlusses (2) wirkt.

3. Vorrichtung nach Anspruch 1 oder 2, wobei die gegenwirkende elastische Einrichtung (8) zwischen dem Kolben (7) und der Innenfläche des Raums (6) angeordnet ist.

4. Vorrichtung nach einem der vorangehenden Ansprüche, wobei der Beschleunigungsregler (19) während der Bewegung des Verschlusses (2) auf die Dichtungskammer (1) zu geschlossen ist.

5. Vorrichtung nach einem der vorangehenden Ansprüche, wobei der Verschluß (2) vordere Auskehlungen (12) umfaßt, deren Profil sich von der Speiseleitung (4) zu dem Anschluß (3) hin zunehmend verringert, wobei die vorderen Auskehlungen (12) sich mit der Rückwärtsbewegung des Verschlusses (2) unter Wirkung des Drucks des Fluids, das in der Speiseleitung (4) strömt, zunehmend öffnen.

6. Vorrichtung nach einem der vorangehenden Ansprüche, wobei der Aufbau so ist, daß die Rückwärtsbewegung des Verschlusses (2) eine Folge des Ausgleichs des Fluids der Dichtungskammer (1), das in den Raum (6) verdrängt wurde, durch die Verschiebung des gleitenden Kolbens (7) und das Zusammendrücken der gegenwirkenden Gegendruckfeder (8) ist.

7. Vorrichtung nach Anspruch 6, wobei der Aufbau so ist, daß die Rückwärtsbewegung des Verschlusses (2) proportional zu der Beziehung V1/V2 = 1 und eine Funktion derselben ist, wobei V1 das Volumen ist, das der Rückwärtsbewegung des Verschlusses (2) entspricht, und V2 das Volumen des Fluidausgleichs ist, das sich auf die Verschiebung des gleitenden Kolbens (7) bezieht.

8. Vorrichtung nach einem der vorangehenden Ansprüche, wobei der Aufbau so ist, daß die Verschiebung S2 des gleitenden Kolbens (7) in dem Innenraum (6) direkt proportional zu dem Produkt aus dem Hub S1 des Verschlusses (2) und der Differenz zwischen dem Quadrat des Außendurchmessers des Verschlusses (2) und dem Quadrat des Durchmessers des Innenraums (6) und umgekehrt proportional zum Quadrat des Durchmessers des Innenraums (6) ist.

9. Vorrichtung nach einem der vorangehenden Ansprüche, wobei der Verschluß (2) mit wenigstens einem Loch (17) versehen ist, das den Innenraum (6) mit dem Sitz (16) verbindet.

10. Einsatz der Vorrichtung nach einem der vorangehenden Ansprüche in jedem beliebigen Typ öldynamischer Ventile, die für die Betätigung von Steuerungen bei hydraulischen Vorgängen von Aufzügen, Hebewerken, Lastaufzügen und dergleichen eingesetzt werden.

## Revendications

1. Dispositif adapté à l'actionnement de commandes dans des systèmes de fonctionnement hydrauliques pour diminuer les effets d'agitation qui en découlent, comprenant :

- un corps de soupape (5) relié à une conduite d'alimentation (4) d'un circuit de fluide et doté d'un siège (16), comportant un échappement de drainage (10), et d'une lumière (3) reliant ladite conduite d'alimentation (4) au siège (16) ;
- un clapet coulissant creux (2), comportant un espace interne (6), faisant saillie depuis le siège (16) et s'engageant, dans la position fermée, dans la lumière (3), et
- un ressort de rappel (15) agissant sur ledit clapet (2) pour le maintenir dans une position de fermeture ;

caractérisé en ce que ledit dispositif comprend, en outre, une chambre d'étanchéité (1) renfermant un fluide pressurisé et reliée à la conduite d'alimentation (4) via une conduite (18) dotée d'un régulateur d'accélération (19), le clapet creux (2) s'étendant dans ladite chambre d'étanchéité (1) et l'espace interne (6) du clapet communiquant avec ladite chambre d'étanchéité (1), et en ce qu'un piston coulissant (7) avec un système élastique antagoniste (8) et avec une butée avant (13) est positionné au sein de l'espace interne (6) dudit clapet creux (2).

2. Dispositif selon la revendication 1, dans lequel le ressort de rappel (15) est situé dans la chambre d'étanchéité (1) et agit sur une extrémité du clapet (2).

3. Dispositif selon la revendication 1 ou 2, dans lequel le moyen élastique antagoniste (8) est positionné entre le piston (7) et la surface interne de l'espace (6).

4. Dispositif selon l'une quelconque des revendications précédentes, dans lequel le régulateur d'accélération (19) est fermé durant le déplacement du clapet (2) vers la chambre d'étanchéité (1).

5. Dispositif selon l'une quelconque des revendications précédentes, dans lequel le clapet (2) comprend des rainures avant (12) dont le profil diminue progressivement de la conduite d'alimentation (4) à la lumière (3) ; lesdites rainures avant (12) s'ouvrant progressivement avec le déplacement vers l'arrière du clapet (2) sous l'effet de la pression du fluide circulant dans la conduite d'alimentation (4).

6. Dispositif selon l'une quelconque des revendications précédentes, dans lequel la configuration est telle que le déplacement vers l'arrière du clapet (2) est une conséquence de la compensation du fluide de la chambre d'étanchéité (1) déplacé dans l'espace (6), avec le déplacement du piston coulissant (7) et la compression du ressort antagoniste (8).

7. Dispositif selon la revendication 6, dans lequel la configuration est telle que le déplacement vers l'arrière du clapet (2) est proportionnel à et fonction de la relation V1/V2 = 1, où V1 est le volume correspondant au déplacement vers l'arrière du clapet (2) et V2 est le volume de la compensation de fluide se rapportant au déplacement du piston coulissant (7).

8. Dispositif selon l'une quelconque des revendications précédentes, dans lequel la configuration est telle que le déplacement du piston coulissant (7) dans l'espace interne (6) est directement proportionnel au produit du déplacement du clapet (2) avec la différence entre le diamètre extérieur au carré du clapet (2) et le diamètre au carré de l'espace interne (6), et inversement proportionnel au diamètre au carré de l'espace interne (6).

9. Dispositif selon l'une quelconque des revendications précédentes, dans lequel le clapet (2) est doté d'au moins un orifice (17) faisant communiquer l'espace interne (6) avec le siège (16).

10. Utilisation du dispositif selon l'une quelconque des revendications précédentes dans n'importe quel type de soupapes oléodynamiques employées pour l'actionnement de commandes dans des systèmes de fonctionnement hydrauliques d'ascenseurs, d'élévateurs, de monte-charge et analogues.

FIG. 1

FIG. 2

7